# EUROPÄISCHE PATENTANMELDUNG

(11) **EP 0 608 771 A1**
(43) Veröffentlichungstag der Anmeldung: **03.08.1994**
(21) Anmeldenummer: 94100824.5
(22) Anmeldetag: 21.01.1994
(51) Int. Cl.: B60R 16/00, B60J 7/057, H01H 3/02, H01H 25/00

(54) **Verfahren und Vorrichtung zum Betätigen von Einbaukomponenten in Kraftfahrzeugen**

(30) Priorität: 26.01.1993 DE 4301961
(71) Anmelder: ABB PATENT GmbH, D-68309 Mannheim (DE)
(72) Erfinder: Leitner, Josef, D-58515 Lüdenscheid (DE); Schmid, Werner, D-58513 Lüdenscheid (DE); Stoffel, Andreas, D-58339 Breckerfeld (DE); Figge, Hans-Joachim, D-58339 Breckerfeld (DE)
(74) Vertreter: Rupprecht, Klaus, Dipl.-Ing.

(57) **Zusammenfassung**

Die Erfindung betrifft ein Verfahren zum Betätigen von Einbaukomponenten in Kraftfahrzeugen, insbesondere Schiebedach, Schiebehubdach, Fensterheber, Sitzverstellung und ähnliches, unter Verwendung elektrischer Betätigungsglieder, z. B. Stellmotoren, welche durch Betätigung von Schaltelementen mit Strom beaufschlagt werden, dadurch gekennzeichnet, daß einer Schaltfunktion der Schaltelemente eine Sollwertvorgabe überlagert ist, wobei durch Betätigung eines Schaltelements ein erster Signalimpuls an eine Steuerung zur Beaufschlagung der zugeordneten Komponente und ein zweiter Signalimpuls zur Übermittlung des gewünschten Sollwerts an die Steuerung übermittels wird, welche ihrerseits die Ausführung der gewünschten Schaltfunktion aktiviert.

## Beschreibung

Die Erfindung betrifft ein Verfahren sowie eine Vorrichtung zum Betätigen von Einbaukomponenten in Kraftfahrzeugen, insbesondere Schiebedach, Schiebehubdach, Fensterheber, Sitzverstellung und ähnliches, unter Verwendung elektrischer Betätigungsglieder, z. B. Stellmotoren, die durch Betätigung von Schaltelementen mit Strom beaufschlagt werden.

Es ist bekannt, daß bei der Ausstattung von Kraftfahrzeugen in zunehmendem Maße dem Wohlbefinden des oder der Fahrzeugbenutzer, insbesondere des Fahrzeugführers, Rechnung getragen wird. Demgemäß wird eine Vielzahl von Ausstattungsmerkmalen für die verschiedenen Kraftfahrzeugtypen angeboten, die zu ihrer Nutzung im Betrieb üblicherweise manuell aktiviert werden müssen.

Im Hinblick auf die zunehmende Verkehrsdichte, die vom Kraftfahrzeugführer erhöhte Aufmerksamkeit abverlangt, besteht die Forderung nach bedienungsfreundlicher Betätigung der jeweiligen Komponente, insbesondere nach einfacher Handhabung, um so zu vermeiden, daß der Benutzer in übermäßiger Weise abgelenkt wird, weil die betreffende Komponente zu ihrer Handhabung ein Übermaß an Aufmerksamkeit abverlangt, um Fehlbedienungen zu verhindern. Dies betrifft insbesondere solche Komponenten, z. B. Schiebedächer oder Seitenfenster, die aufgrund ihrer räumlichen Anordnung nicht im Sehfeld des auf den vor ihm liegenden Verkehr achtenden Fahrzeugführers liegen und bei Fehlhandhabungen diesen veranlassen könnten, zumindest kurzzeitig das Verkehrsgeschehen vor ihm außer acht zu lassen und sich dem Bedienungsproblem zuzuwenden.

Ausgehend von diesem Stand der Technik ist es daher Aufgabe der Erfindung ein Verfahren der eingangs genannten Art derart weiterzubilden, daß die Handhabung der jeweiligen elektrisch betätigten Komponente, insbesondere dann, wenn neben Endstellungen auch Zwischenstellungen in Frage kommen, möglichst einfach erfolgen kann. Ferner soll eine Vorrichtung zur Durchführung des erfindungsgemäßen Verfahrens angegeben werden.

Die Lösung dieser Aufgabe besteht in den kennzeichnenden Merkmalen des Patentanspruchs 1. Danach ist vorgesehen, daß einer jeden Schaltfunktion der Schaltelemente eine Sollwertvorgabe überlagert ist. Hierbei wird berücksichtigt, daß es heute allgemeiner Standard, die Betätigung der verschiedenen Komponenten über Steuerungen in sogenannten Zentralelektrik-Einheiten vorzunehmen, um so die Möglichkeit zu schaffen, daß die Schaltelemente zur Betätigung nur auf die geringen Steuerströme ausgelegt sein müssen, während der jeweilige Laststrom direkt von der Zentralelektrik der betreffenden Komponente zugeführt wird.

Demgemäß wird bei Betätigung eines Schaltelements zunächst ein erstes Signal für die betreffende Einbaukomponente an eine Steuerung übermittelt, dem zur Beaufschlagung dieser zugeordneten Komponente ein zweites Signal entsprechend dem gewählten Sollwert folgt, das ebenfalls an die Steuerung übermittelt wird.

In zweckmäßiger Weiterbildung der Erfindung erfolgt die gewünschte Betätigung der zugeordneten Komponente erst durch die Abgabe des zweiten Signals. Dabei ist ferner berücksichtigt, daß bei erfolgter Beaufschlagung der zugeordneten Komponente zwecks Rückstellung der Komponente in ihre Ausgangsstellung die Übermittlung eines einzigen Rückstellsignals ausreichend ist, um die jeweilige Einbaukomponente in ihre Ausgangsstellung zu beaufschlagen.

Für den Fall, daß bei einer Einbaukomponente mehrere unterschiedliche Betätigungsvarianten ausführbar sind, ist gemäß einer vorteilhaften Ausgestaltung des erfindungsgemäßen Verfahrens für jede Betätigungsvariante eine separate Schaltfunktion mit entsprechend zugeordnetem ersten Signal vorgesehen, während die auch hier erforderliche Sollwertvorgabe für alle Schaltfunktionen mit dem zweiten Signal erfolgt.

Als Vorrichtung zur Durchführung des erfindungsgemäßen Verfahrens ist ein Schaltgerät mit einem Gehäuse vorgesehen, welches wenigstens eine Kontaktstelle mit zugeordneten Betätigungsmitteln aufweist. Entsprechend den kennzeichnenden Merkmalen des Patentanspruchs 4 ist zur Lösung der zugrundeliegenden Aufgabe erfindungsgemäß wenigstens ein Sollwertgeber vorgesehen, der mit einer Steuerung zusammenarbeitet, die von jeder Kontaktstelle ansteuerbar ist.

In vorteilhafter Ausgestaltung des erfindungsgemäßen Schaltgeräts kann der Sollwertgeber eine veränderlich einstellbare Kapazität oder Induktivität oder ein Potentiometer sein, abhängig von dem jeweiligen Anwendungsfall.

Eine bevorzugte Ausführungsform des erfindungsgemäßen Schaltgeräts sieht vor, daß die Betätigungsmittel als Mehrwegeschaltstücke ausgebildet sind. Hierdurch ist eine sehr kompakte Bauweise des Schaltgeräts möglich, da mit einem Schaltstück, daß ein Schaltgriff oder -hebel bzw. -knopf sein kann, mehrere Schaltfunktionen ausgeführt werden können.

In zweckmäßiger Weiterbildung der Erfindung kann demgemäß das Schaltgerät als Schiebe-Wippschalter ausgebildet sein kann, wobei die Sollwertvorgabe durch Verschiebung des Betätigungsmittels und die Schaltfunktion durch Wippbetätigung vorgesehen ist. Hierbei kann, falls erforderlich, das Schaltgerät als Schiebe-Wipp-Taster gestaltet sein, wobei nach Entlastung des die Schaltfunktion wahrnehmenden Betätigungsmittels dieses in seine Ausgangsstellung oder in eine Neutralstellung zurückkehrt, während die Verschiebung beibehalten wird.

Diese und weitere vorteilhafte Ausgestaltungen sind Gegenstand der Unteransprüche.

Anhand von in der Zeichnung dargestellten Ausführungsbeispielen des erfindungsgemäßen Schaltgeräts, sollen die Erfindung einschließlich des erfindungsgemäßen Verfahrens, vorteilhafte Ausgestaltungen und besondere Vorteile der Erfindung näher erläutert und beschrieben werden.

Es zeigen:
- Figur 1: : ein elektrisches Schaltgerät gemäß der Erfindung in Draufsicht in verschiedenen Schaltstellungen (a bis c)
- Figur 2:: das Schaltgerät gemäß Figur 1 in Seitenansicht mit ausschnittweiser Darstellung der verschiedenen Schaltstellungen des Schaltgliedes (a bis c)
- Figur 3:: das Schaltgerät gemäß Figur 1 in Seitenansicht mit ausschnittweiser Darstellung der Ausschaltstellung des Schaltgliedes
- Figur 4:: ein zweites elektrisches Schaltgerät in Draufsicht
- Figur 5:: ein drittes elektrisches Schaltgerät in Draufsicht
- Figur 6:: ein viertes elektrisches Schaltgerät in Schrägansicht
- Figur 7:: ein fünftes elektrisches Schaltgerät in Schrägansicht
- Figur 8:: ein sechstes elektrisches Schaltgerät in Draufsicht
- Figur 9:: ein siebentes elektrisches Schaltgerät in Schrägansicht in verschiedenen Schaltstellungen (a bis c)
- Figur 10:: ein achtes elektrisches Schaltgerät in Schrägansicht in verschiedenen Schaltstellungen (a bis c)

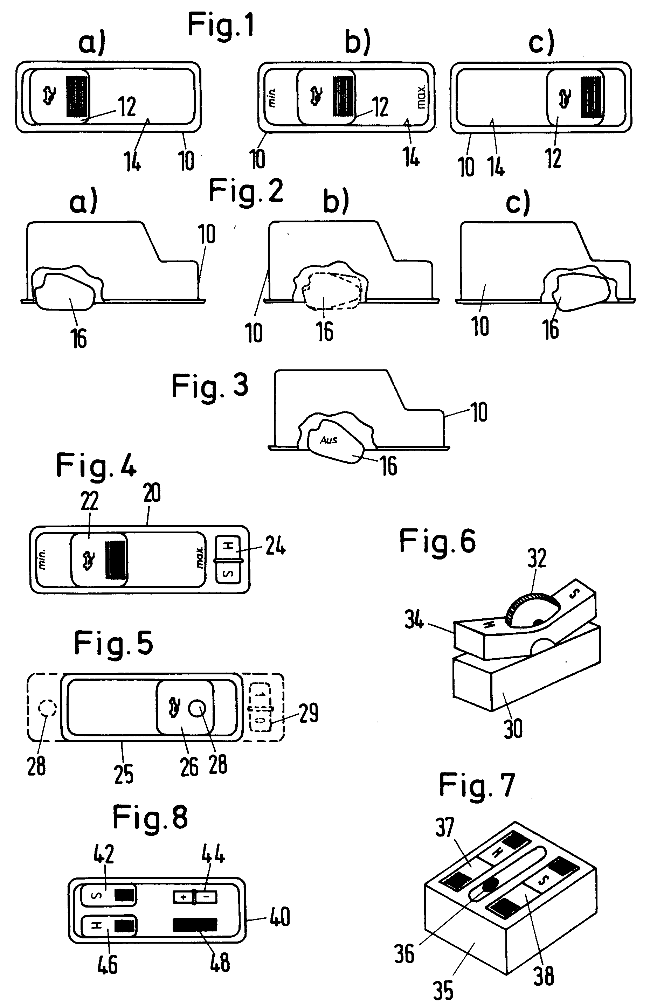

In Figur 1 ist ein elektrisches Schaltgerät 10 mit einem Betätigungsglied 12 in Draufsicht dargestellt. Das Betätigungsglied 12 ist als Schiebe-Wipp-Taste ausgebildet und in einer in dem Schaltgerät 10 eingeformten Längsnut 14 geführt. Die Figur 1 zeigt in den Abbildungen a bis c drei verschiedene Schaltstellungen des Betätigungsgliedes 12, wobei in Abbildung a die Ausgangsstellung, in Abbildung b eine Zwischenstellung in Abbildung c eine weitere Zwischenstellung kurz vor der maximalen Endstellung des Betätigungsgliedes wiedergegeben sind.

In Figur 2 ist das in Figur 1 dargestellte Schaltgerät 10 in Seitenansicht wiedergegeben, wobei zusätzlich in ausschnittweiser Darstellung ein Schaltglied 16, das von dem Betätigungsglied 12 beaufschlagbar ist, in verschiedenen Schaltstellungen gezeigt ist, welche der jeweils gewünschten Schaltfunktion entsprechen und durch Wippbetätigung des Betätigungselementes 12 erzielt wird. Dabei zeigt die Abbildung a von Figur 2 die Schaltstellung "Schieben" bei der Verwendung des Schaltgerätes 10 für ein hier nicht näher gezeigtes Schiebehubdach, die Abbildung b von Figur 2 in gestrichelter Darstellung die Änderung der Schaltstellung des Schaltgliedes 16, welche in Abbildung c von Figur 2 für die Schaltfunktion "Heben" eingenommen ist.

In Figur 3 schließlich ist das aus Figur 1 und 2 ersichtliche Schaltgerät 10 in Seitenansicht mit ausschnittweiser Darstellung der Ausschaltstellung des Schaltgliedes 16 abgebildet.

In Figur 4 ist ein Schaltgerät 20 zur Betätigung eines Schiebehubdachs gezeigt, welches ähnlich dem in Figur 1 gezeigten, ebenfalls für die Betätigung eines Schiebehubdaches vorgesehenen Schaltgeräts 10 ist. Im Unterschied zu dem aus Figur 1 bekannten Schaltgerät 10 sind bei dem in Figur 4 gezeigten zweiten Schaltgerät 20 zwei separat angeordnete Betätigungsmittel 22, 24 vorgesehen. Entsprechend ihrer räumlich getrennten Anordnung erfüllen die beiden Betätigungsmittel 22, 24 auch unterschiedliche Aufgaben. Während das Betätigungsmittel 22, welches dem in Figur 1 wiedergegebenen Betätigungsglied 12 äußerlich entspricht, ausschließlich zur Einstellung eines gewünschten Sollwertes dient, ist das Betätigungsmittel 24 als Zweiwegetaster mit neutraler Mittelstellung ausgebildet und dient zur Ausführung der Schaltfunktionen Schieben "S" und Heben "H".

In Figur 5 ist ein weiteres Schaltgerät 25 dargestellt, dessen Gestaltung auf ähnliche Überlegungen zurückgeht, wie die Gestaltung des Schaltgerätes 20 in Figur 4, wobei jedoch anstelle eines Mehrwegetasters ein Schieberegler 26 zur Sollwerteingabe für Schieben bzw. Heben mit einem sogenannten push-push-oder Druckfolge-Taster 28 oder alternativ hierzu einem Ausschalter 29 kombiniert ist, welche entweder im Betätigungsmittel 26 oder in einer zusätzlichen Montagefläche des Schalters 25 integriert sind. Demgemäß sind die separat vorgesehenen Schaltmittel 28, 29 als Alternativen in gestrichelter Darstellung wiedergegeben. Die Wirkungsweise des Schaltgeräts 25 ist so vorgesehen, daß der Sollwert für Schieben und Heben über ein Linear-Potentiometer eingestellt und die Betätigung des Schiebehubdachs über den jeweils vorgesehenen Druckfolge-Taster 28 oder den Ausschalter 29 erfolgt. Dabei kann die "Aus"-Funktion entweder durch Schieben des Sollwertgebers in seine Nullposition oder durch den Ausschalter 29 erreicht werden.

In Figur 6 ist ein weiteres elektrisches Schaltgerät 30 zur Betätigung eines Schiebehubdaches in Schrägansicht dargestellt, das als Wechseltaster oder Drei-Stellungs-Schalter/-Taster mit integriertem Drehpotentiometer 32 ausgestaltet ist. Wie in den zuvor beschriebenen Anordnungen dient das Drehpotentiometer 32 zur Einstellung eines gewünschten Sollwertes, während der vorzugsweise als Wechseltaster mit neutraler Mittelstellung eine Schaltwippe 34 besitzt, welche zur Einschaltung der jeweils gewünschten Schaltfunktion, entweder Schieben oder Heben, dient.

Das in Figur 7 ebenfalls in Schrägansicht wiedergegebene weitere Schaltgerät 35, bei dem anstelle eines Wechseltasters mit neutraler Mittelstellung entsprechend dem in Figur 6 gezeigten Schaltgerät 30 ein Schiebepotentiometer 36 mit zwei Wipptastern 37, 38 für die Schaltfunktionen Schieben und Heben vereinigt sind, dient ebenfalls zur Betätigung eines Schiebehubdachs. Hierbei ist vorzugsweise der Sollwertgeber für die Vorgabe der jeweiligen Einstellposition des Schiebehubdachs mittig zwischen den beiden Tastschaltern 37, 38 angeordnet, welche Auf- oder Zu-Signale entsprechend ihrer Schaltfunktion für Schieben oder Heben abgeben.

In Figur 8 ist ein weiteres elektrisches Schaltgerät 40 gezeigt, bei welchem schließlich die einzelnen Schaltfunktionen, wie auch die Sollwertvorgabe in bezug auf die jeweiligen Schaltfunktionen schaltungsmäßig getrennt sind, so daß für jeden Schaltvorgang wie auch für die zugeordnete Sollwertvorgabe diskret angeordnete Betätigungsmittel 42, 44, 46, 48 vorgesehen sind. Während die auf der linken Seite des Schaltgeräts 40 angeordneten Betätigungsmittel 42, 46 die jeweilige Schaltfunktion betreffen, d. h. die Betätigung zum Schieben bzw. Heben des Schiebehubdachs einleiten, dienen die auf der rechten Seite des Schaltgeräts 40 angeordneten Betätigungsmittel 44, 48 jeweils zur Einstellung des gewünschten Sollwerts. Entsprechend den Möglichkeiten der hier nicht näher dargestellten elektronischen Steuerung erfolgt die Sollwertvorgabe für die gewünschte Öffnungsstellung beim Schieben durch den Wipptaster 44, dessen Ruhestellung die neutrale Mittelstellung ist, und die Sollwertvorgabe für die Hubbewegung des Schiebehubdachs durch ein mit einem Rändelrad versehenes Drehpotentiometer 48.

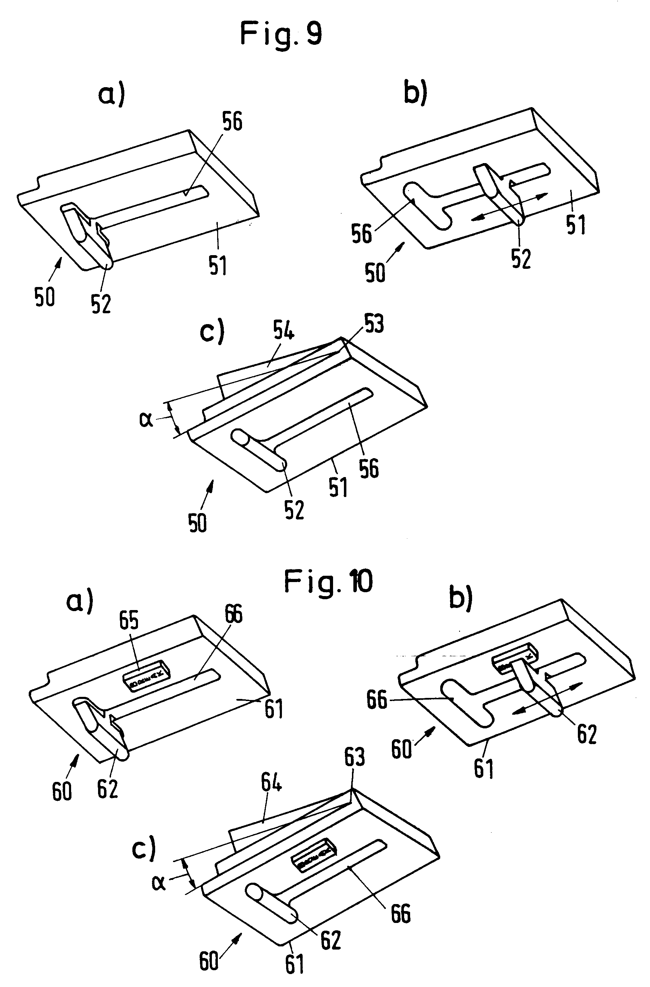

Gemäß einer weiteren in Figur 9 dargestellten Ausführungsform eines elektrischen Schaltgeräts 50 gemäß der Erfindung, welches ebenfalls insbesondere zur Betätigung eines Schiebehubdachs dient, wird der Bewegungsablauf beim Öffnungsvorgang des hier nicht näher gezeigten Schiebehubdachs durch die Bewegung der Schaltelemente 51, 52 des Schaltgeräts 50 nachgebildet. Hierbei dient die so bezeichnete Wippe 51 zur Einstellung der Sollwertvorgabe für die Hubbetätigung des Schiebehubdachs, während mit dem Schieber 52 der Sollwert für die Öffnungsstellung bei der Funktion "Schieben" des Schiebehubdachs eingestellt wird. Hierbei ist der Sollwertvorgabe gleichzeitig eine Schaltfunktion zugeordnet, die aktiviert wird, sobald eines der beiden Schaltelemente 51, 52 aus ihrer in Figur 9 a gezeigten Ruhestellung verlagert wird.

In den Figuren 9 b und c sind unterschiedliche Schaltstellungen wiedergegeben. Hierbei zeigt die Abbildung 9 b, daß der Schieber 52 auf etwa der Hälfte des Schiebeweges positioniert ist, was der halben Öffnung des Schiebedachs entspricht.

In Figur 9 c ist erkennbar, daß die Schaltwippe 51 ausgehend von einem nunmehr erkennbaren Sockel 54 um einen Winkel α nach unten verschwenkt ist, welcher Winkel α der entsprechenden Huböffnung des Hubdachs entspricht.

Gemäß einer anderen Ausführungsform kann vorgesehen sein, daß die Beaufschlagung des Hubdachs nur solange erfolgt, solange die Schaltwippe 51 betätigt wird, d. h. in verschwenkter Stellung gehalten wird.

Insbesondere ist darauf hinzuweisen, daß die Hubbetätigung des Hubdachs durch Verschwenken der Wippe 51 nur möglich ist, wenn sich der Schieber 52 in seiner Ruhestellung befindet und hierbei bei Betätigung der Schaltwippe 51 in einer kulissenähnlichen Ausnehmung 56 eintaucht. Hierdurch ist also gleichzeitig eine Sicherheit gegen Fehlbedienung gegeben, welche verhindert, daß der Schiebeöffnung des Schiebehubdachs eine Anhebung überlagert wird, was sich störend auf die Funktion des Schiebehubdachs auswirken würde.

In Figur 10 ist in den Einzelfiguren a bis c ein Schaltgerät 60 dargestellt, daß in seinem Aufbau weitestgehend dem in Figur 9 dargestellten und erläuterten Schaltgerät 50 entspricht. Auch hier weist das Schaltgerät 60 eine Schaltwippe 61 sowie einen Schieber 62 auf, welche die jeweilige Schaltstellung des zugeordneten Schiebehubdachs visualisieren. Dementsprechend befindet sich gemäß Figur 10 b der Schieber 62 in einer Mittelstellung entsprechend einer halben Öffnung des Schiebedachs. Außerdem ist in Figur 10 c die um den Winkel α von dem Sockelteil 64 verschwenkte Schaltwippe 61 gezeigt, was der entsprechenden Anhebung des Hubdachs entspricht.

Unterschiedlich gegenüber dem in Figur 9 gezeigten Schaltgerät 50 besitzt das Schaltgerät 60 zusätzlich eine Memory-Taste 65, die im gezeigten Beispiel mit "BREAK" gekennzeichnet ist und dazu dient, bei Betätigung das Schiebehubdach zu schließen, wobei die vorherige Öffnungsstellung gespeichert wird und bei abermaliger Betätigung der Memory-Taste 65 wieder eingestellt wird. Dies hat insbesondere den Vorteil, daß bei kurzzeitigem Verlassen des hiermit ausgerüsteten Kraftfahrzeugs durch einfache Betätigung der Memory-Taste 65 das Fahrzeugdach geschlossen werden kann und, sobald die Fahrt fortgesetzt wird, durch abermaliges Betätigen die vorherige, als angenehm empfundene Öffnungsstellung des Schiebehubdachs erneut eingestellt wird.

Der Vorteil gegenüber den derzeitigen Lösungen, bei welchen zwecks Erreichung der gewünschten Stellung das Betätigungselement solange gehalten werden muß, bis die gewünschte Lage, z. B. halb geöffnet, erreicht ist wird gemäß der Erfindung die gewünschte Stellung quasi vorprogrammiert durch zeitlich kurze Betätigung der Betätigungselemente, so daß der Benutzer, insbesondere der Kraftfahrzeugführer, möglichst wenig vom Verkehrsgeschehen abgelenkt ist.

Unabhängig von der speziellen technischen Ausgestaltung des jeweiligen Schaltgerätes, d. h. ob ein Kombibetätigungselement oder diskrete Betätigungsmittel wie bei dem in Figur 8 gezeigten Schaltgerät 40 wird generell gemäß der Erfindung der jeweiligen Betätigungsfunktion eine Sollwertvorgabe zugeführt, die in Verbindung mit der derart angesteuerten Zentralelektrik-Einheit die gewünschte Schaltfunktion ausführt. Ist das Dach z. B. in der Schiebefunktion halb geöffnet und es wird die Funktion Hebedach halb geöffnet gewünscht, so genügt ein kurzes Umschalten des Betätigungselementes in die Hebefunktion, was zur Folge hat, daß das Dach zuerst geschlossen wird und anschließend die halb geöffnete Hebestellung verstellt wird.

Ebenso ist es möglich, daß eine einmal gefundene optimale Einstellung des Schiebehubdachs in einem hier nicht näher dargestellten Memory gespeichert werden kann und jederzeit z. B. nach einer Reiseunterbrechung wieder aktiviert werden kann.

## Patentansprüche

1. Verfahren zum Betätigen von Einbaukomponenten in Kraftfahrzeugen, insbesondere Schiebedach, Schiebehubdach, Fensterheber, Sitzverstellung und ähnliches, unter Verwendung elektrischer Betätigungsglieder, z. B. Stellmotoren welche durch Betätigung von Schaltelementen mit Strom beaufschlagt werden, dadurch gekennzeichnet, daß einer Schaltfunktion der Schaltelemente eine Sollwertvorgabe überlagert ist.

2. Verfahren nach Anspruch 1, dadurch gekennzeichnet, daß bei Betätigung eines Schaltelements (12, 22, 26, 28, 29, 32, 34, 36, 37, 38, 42, 44, 46, 48) zunächst ein erstes Signal an eine Steuerung übermittelt wird, daß zur Beaufschlagung der zugeordneten Komponente ein zweites Signal entsprechend dem gewählten Sollwert an die Steuerung übermittelt wird und daß erst durch Abgabe des zweiten Signals die gewünschte Betätigung erfolgt und daß durch Übermittlung eines einzigen Rückstellsignals die jeweilige Einbaukomponente in ihre Ausgangsstellung beaufschlagt und rückgestellt wird.

3. Verfahren nach Anspruch 1 oder 2, dadurch gekennzeichnet, daß für jede Betätigungsvariante eine separate Schaltfunktion mit jeweils zugeordnetem ersten Signal vorgesehen ist und daß die Sollwertvorgabe für alle Schaltfunktionen jeweils mit dem zweiten Signal erfolgt.

4. Schaltgerät zur Durchführung des Verfahrens nach einem der Ansprüche 1 bis 3 mit wenigstens einer Kontaktstelle mit jeder Kontaktstelle zugeordneten Betätigungsmitteln, dadurch gekennzeichnet, daß wenigstens ein Sollwertgeber (12, 22, 26, 32, 36, 44, 48) vorgesehen ist, der mit einer Steuerung zusammenarbeitet, die von jeder Kontaktstelle ansteuerbar ist.

5. Schaltgerät nach Anspruch 4, dadurch gekennzeichnet, daß der Sollwertgeber eine veränderlich einstellbare Kapazität oder Induktivität oder ein Potentiometer ist.

6. Schaltgerät nach einem der Ansprüche 4 oder 5, dadurch gekennzeichnet, daß als Betätigungsmittel ein Mehrwegeschaltglied vorgesehen ist.

7. Schaltgerät nach einem der Ansprüche 4 bis 6, dadurch gekennzeichnet, daß das Schaltgerät als Schiebe-Wipp-Schalter ausgebildet ist und daß die Sollwertvorgabe durch Verschiebung eines Betätigungsmittels und die Ausführung der Schaltfunktion durch Wippbetätigung erfolgt.

8. Schaltgerät nach Anspruch 7, dadurch gekennzeichnet, daß das Schaltgerät als Schiebe-Wipp-Taster ausgebildet ist.

9. Schaltgerät nach einem der vorherigen Ansprüche, dadurch gekennzeichnet, daß zur Beaufschlagung eines Schiebehubdachs ein Kombischaltgerät (50, 60) vorgesehen ist, welches einen Schieber (52, 62) für die Schiebebetätigung sowie eine Schaltwippe (51, 61) für die Hubbetätigung aufweist.

10. Schaltgerät nach einem der vorherigen Ansprüche, dadurch gekennzeichnet, daß zusätzlich zu den Schaltelementen für die Betätigung der zugeordneten Komponente eine Memory-Taste (65) vorgesehen ist, welche zur Erfassung und Speicherung der jeweils gewählten Einstellung dient.

11. Verfahren nach Anspruch 1, dadurch gekennzeichnet, daß durch die Betätigungsart der Schaltelemente die Verstellbewegung der hierdurch beaufschlagten Einbaukomponenten nachgebildet und so visualisiert werden.

12. Verfahren nach einem der Ansprüche 1 bis 3 und 11, dadurch gekennzeichnet, daß die jeweilige Einstellung der zugeordneten Einbaukomponente erfaßt und gespeichert wird und jederzeit abrufbar ist.
